# EUROPEAN PATENT APPLICATION

(11) **EP 2 644 826 A1**
(43) Date of publication of application: **02.10.2013**
(21) Application number: 12161503.3
(22) Date of filing: 27.03.2012
(51) Int. Cl.: F01D 5/08, F01D 19/02, F01D 25/10, H05B 6/02

(54) **A system for inductive heating of turbine rotor disks**

(71) Applicant: Siemens Aktiengesellschaft, 80333 München (DE)
(72) Inventor: Nimptsch, Harald, 45136 Essen (DE); Exnowski, Sven, 58239 Schwerte (DE); Kulig, Stefan, 44267 Dortmund (DE)

(57) **Abstract**

A turbine rotor with at least one rotor disk is disclosed. The turbine rotor comprises a heating arrangement for heating at least a part of the rotor disk. The heating arrangement comprises a conductor for conducting electric current. The conductor is positioned such that in presence of the electric current in the conductor, Eddy current is generated in the part of the rotor disk. The electric current is an alternating current. The Eddy currents so generated in the part of the rotor disk results in inductive heating of the part of the rotor disk.

## Description

The invention relates to a system and a method for heating of parts of a gas turbine, and more particularly to a system and a method for heating of rotor disks of a gas turbine.

Some parts in a gas turbine with high operating temperatures are constantly subjected to cyclic mechanical stresses. One example of such part, as is well known, is the turbine rotor containing rotor disks and blades, the blades radially extending outwards from the rotor disks of the turbine rotors. The disks rotate due to the movement of the hot gases through the blades of the turbine rotors. This impact on the blades and the resulting rotation generated at the central parts of the rotor disks result in cyclic mechanical stress in the rotor disk.

Moreover, in the gas turbine, at a stage when the rotation of the turbine rotors has just been initiated, the high temperature hot gases passing through the blades rapidly increase the temperature of peripheral parts of the turbine rotors, i.e. the blades and the peripheral portion of the disk as compared to the central part of the disk, whereas the central part of the disk still has a low temperature at this stage of operation, thus setting up a thermal gradient within the turbine rotors. As the gases are at very high temperatures the thermal gradient is also extreme and thus results in thermal stress in the turbine rotors. However, after being continually rotated for sometime heat gets distributed throughout the turbine rotors and the gradient is reduced.

The cyclic mechanical stress coupled with the thermal stress may result in damage to the turbine rotors. The chances of damage are greater in forged parts of the turbine. The chances of damage are multiplied as it is well known that despite use of any forging technique during the manufacturing, the forged parts contain some level of material discontinuities which grow, depending on the position, orientation, and working condition of the forged parts for example the turbine rotors containing the disks and the blades.

Thus pre-heating of the disks before the initiation of rotation of the turbine rotors or during the initial stages of rotation will minimize the chances of failure or damage of the turbine rotors as a result of increased fracture toughness of the rotor disk material due to reduced thermal gradient.

Thus, wherever necessary, heating of rotor disks is used prior to the initiation of rotation of the turbine rotors or during the initial stages of rotation. Heating is achieved by guiding heated air through the rotor disks when the turbine rotor is rotating slowly. This method and required devices are expensive and take up additional installation space making the turbine bulky. Moreover, the thermal energy is supplied indirectly into the material through the surface of the disks and from there, the thermal energy distributes into the disk. Thus, such a process is necessarily accompanied by undesired energy losses and also requires longer time to provide optimal temperature in the disks thus resulting into a drop in efficiency of the gas turbine.

Another way of heating the disks is by running the gas turbine with a reduced speed in the initial stages of rotation, after the combustion has been ignited, to allow the disks to normally obtain the required optimal temperatures for a desired optimal speed of rotation of the turbine rotors. This process takes place at significantly reduced rotational speeds than the desired rotational speed. The disadvantages here are the additional fuel consumption and the increased emission of pollutant gases during the initial stages of rotation.

The object of the invention is therefore to disclose a system and a method for heating of parts of a gas turbine, and more particularly a system and a method for heating of a rotor disk of a gas turbine, in a simple, efficient and economic way.

The objects are achieved by the invention disclosed in a turbine rotor of claim 1 and a method of claim 12. Advantageous developments emerge from the dependent claims.

The idea of the invention is to provide a system and a method for inductive heating of rotor disks in turbine rotors. The system is a turbine rotor with at least one rotor disk. The turbine rotor, according to the invention, comprises a heating arrangement for heating at least a part of the rotor disk. The heating arrangement comprises a conductor for conducting electric current. The conductor is positioned relative to the rotor disk such that in presence of the electric current in the conductor, Eddy current is generated in the part of the rotor disk. The conductor may be electrically insulated from the part of the rotor disk to be heated. The electric current is an alternating current. The Eddy currents so generated in the part of the rotor disk result in inductive heating of the part of the rotor disk.

In an embodiment of the turbine rotor, the turbine rotor comprises a plurality of the rotor disks and the conductor extends across at least two adjacent rotor disks in the turbine rotor. Thus different parts in the plurality of the rotor disks can be inductively heated with the conductor. As an example, the conductor may be positioned such that it extends along the rotational axis of the rotor disks and through central bores of the disks.

In another embodiment of the turbine rotor, the conductor comprises a tie rod of the turbine rotor. The tie rod is adapted to conduct the electric current. As is known in the art, the tie rod is a common component of turbines and when the tie rod itself functions as the conductor to conduct the electric current, the requirement of having additional component to function as the conductor is obviated. For example, the tie rod can be a central tie rod of the turbine rotor. This makes the construction of the turbine rotor simple and cost effective.

In another embodiment of the turbine rotor, the conductor further comprises a conducting element arranged along the tie rod. The conductor may be electrically insulated from the tie rod. The conducting element is adapted to conduct the electric current. This provides the flexibility of using any desired material for the construction of conducting element. Additionally the conducting element may have a desired shape that suits the construction of the turbine.

In another embodiment of the turbine rotor, the conductor comprises a plurality of the conducting elements. The conducting elements are arranged symmetrically along a circumference of a cross-section of the tie rod. This provides the advantage of achieving uniform heating of rotor disks.

In another embodiment of the turbine rotor, the conductor comprises at least one protrusion. The protrusion extends outwards from the conductor towards an external periphery of the rotor disks. The protrusion is adapted to conduct the electric current and generate Eddy current in the part of the rotor disk. This provides an advantage of heating rotor discs with large central bore or any other type of turbine rotors for which the internal surface of the rotor disk has a great distance from a conductor which is located in or on the tie rod or shaft, since this great distance would result in less efficient generation of Eddy currents and, thus, heating.

In another embodiment, the turbine rotor further comprises an electrical connector for providing electric current to the conductor. The electrical connector is electrically coupled to the conductor. Thus the electric current may be provided to the conductor and Eddy current may be generated in the part of the rotor disk.

In another embodiment of the turbine rotor, the electrical connector is an electrical inverter. Thus a source of direct current can be used in the turbine rotor for inductive heating.

In another embodiment, the turbine rotor further comprises at least one slip ring. The slip ring is positioned between the conductor and the electrical connector. The electrical current flows in series from the electrical connector to the conductor through the slip ring. The slip ring provides the advantage of providing the electric current to the conductor when the turbine rotor is rotating as well as when the turbine rotor is stationary.

In another embodiment, the turbine rotor further is connected to a control unit adapted to control an amount of the electric current in the conductor. This provides an advantage of regulating the amount of the electric current flowing in the conductor. The strength of the electric current may be regulated. The time for which the electric current flows through the conductor may also be regulated. The flow of the electric current in the conductor may be stopped completely. Additionally the control unit may be used to generate and maintain an intermittent flow of the electric current in the conductor.

In another embodiment of the turbine rotor, the control unit may further comprise a temperature sensor adapted to determine a temperature of the part of the rotor disk. Based on the determined temperature, the control unit is adapted to control the amount of the electric current in the conductor. Thus the functionality of the control unit may be based on the temperature reached in the part of the rotor disks as a result of the inductive heating. The flow of the electric current may be stopped after the part of the rotor disk achieves a desired target temperature. In case the temperature of the part of the rotor disk drops below the desired target temperature, the flow of the electric current in the conductor may again be initiated and subsequently stopped on attainment of the target temperature in the part of the rotor disk.

According to the invention, a method of inductive heating of at least a part of at least one rotor disk of a turbine rotor is also provided. The turbine rotor comprises a heating arrangement for heating the part of the at least one rotor disk and an electrical connector. The heating arrangement comprises a conductor for conducting electric current. The electrical connector is electrically coupled to the conductor and is for providing the electric current to the conductor. The conductor is positioned relative to the rotor disk such that in presence of the electric current in the conductor, Eddy current is generated in the part of the rotor disk. The method comprises passing the electric current in the conductor.

In another embodiment of the method, the passing of the electric current in the conductor is initiated before rotation of the turbine rotor is started. This provides the advantage of heating the part of the rotor disk prior to the rotation of the turbine rotors, thus the turbine rotors may be inductively heated when the rotor disk is stationary.

In another embodiment of the method, the passing of the electric current in the conductor is initiated after rotation of the turbine rotor is started. The turbine rotor in which this embodiment of the method is realized comprises at least one slip ring positioned between the conductor and the electrical connector. The electric current so passed flows in series from the electrical connector to the conductor through the slip ring. This provides the advantage of inductively heating the part of the rotor disk while the turbine rotor is rotating.

In another embodiment, the method comprises controlling the electric current in the conductor based on a determined temperature. The turbine rotor in which this embodiment of the method is realized comprises a control unit adapted to control an amount of the electric current in the conductor and a temperature sensor adapted to determine the temperature of the part of the rotor disk. In controlling the electric current in the conductor, the amount of the electric current in the conductor may be regulated based on the temperature reached in the part of the rotor disks as a result of the inductive heating. The flow of the electric current may be stopped after the part of the rotor disk achieves a desired target temperature. In case if the temperature of the part drops below the desired target temperature, the flow of the electric current in the conductor may again be initiated and subsequently stopped on attainment of the target temperature in the part of the rotor disk.

The disclosed system and the method provide several other advantages. Due to reduction of the thermal stress the start speed for turbine rotors may be increased as compared to the start speed for turbine rotors where the thermal stress is not reduced by external measures. This results in greater operational flexibility of the turbine.

Moreover, as a result of inductive heating, according to the invention, the heat is generated directly where it is needed i.e. in the parts of the rotor disks which need heating for reduction of the thermal stress in the turbine rotors. The heating is quicker, requires less energy and obviates emission of pollutants during the heating. Besides the above mentioned advantages, the construction volume required for the inductive heating, according to the invention, is much smaller than in the case of the existing systems of heating.

The present invention is further described hereinafter with reference to illustrated embodiments shown in the accompanying drawings, in which:
- FIG 1: is a schematic representation of a typical gas turbine;
- FIG 2a: is a schematic representation of a cross-section of a turbine rotor containing a rotor disk, the cross-section is along a direction perpendicular to an axis of rotation of the turbine rotor;
- FIG 2b: is a schematic representation of a frontal view of the turbine rotor;
- FIG 3: schematically represents the generation of Eddy currents in a part of the rotor disk;
- FIG 4: is a schematic representation of an embodiment of a conductor containing a conducting element;
- FIG 5: schematically represents an arrangement of a plurality of the conducting elements;
- FIG 6: schematically represents another arrangement of the plurality of the conducting elements;
- FIG 7: is a schematic representation of the conductor containing protrusions;
- FIG 8: is a schematic representation of the conductor along with a temperature sensor, a control unit and an electrical connector; and
- FIG 9: is a schematic representation of the conductor along with slip rings.

Hereinafter, the best mode for carrying out the present invention is described in details. Various embodiments are described with reference to the drawings, wherein like reference numerals are used to refer to like elements throughout.

In the following description, for purpose of explanation, numerous specific details are set forth in order to provide a thorough understanding of one or more embodiments. It may be evident that such embodiments may be practiced without these specific details.

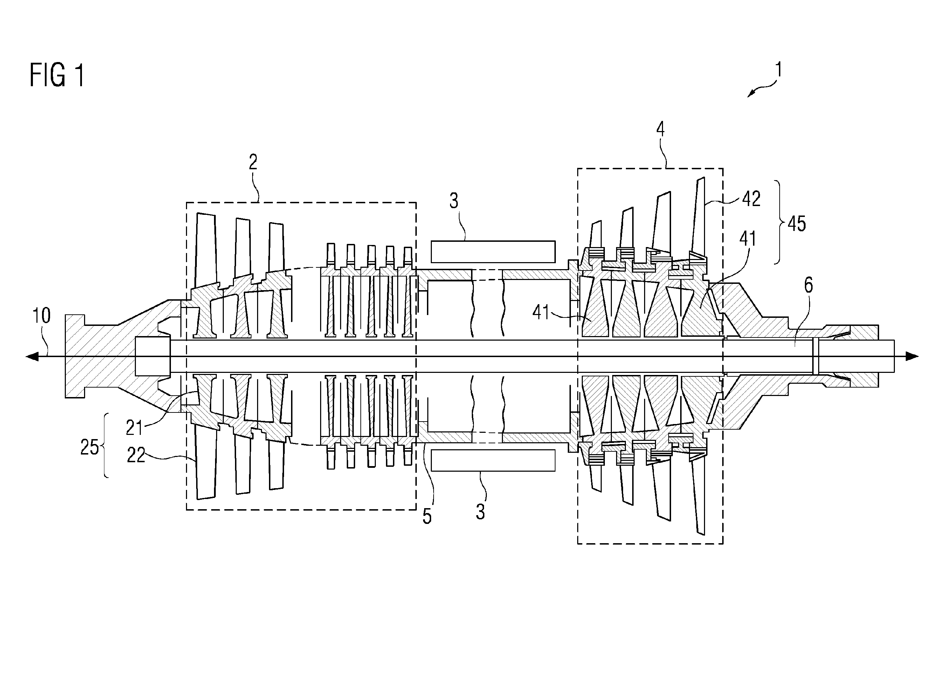

Referring to the figures, FIG 1 schematically represents a typical gas turbine 1 and shows a cross-sectional side view of the same. The gas turbine 1 typically contains an inlet (not shown) for atmospheric air, a compressor unit 2 having rotatable compressor rotors 25, a combustion unit 3, a turbine unit 4 having rotatable turbine rotors 45 and an outlet (not shown).

Atmospheric air is received by the inlet and passed to the compressor unit 2 where the air undergoes compression and is then passed to the combustion unit 3 where the compressed air is added with fuel and ignited. Thus in the combustion unit 3 at least a part of the compressed air is combusted thereby producing hot gases having high temperature and high pressure.

Then the unused compressed air, if any, and the produced hot gases are passed through the turbine rotors 45 of the turbine unit 4 thereby causing the turbine rotors 45 to rotate and generate work. The unused compressed air, if any, and the hot gases after passing through the turbine unit 4 exit the gas turbine 1 through the outlet.

The turbine rotors 45 in the turbine unit 4 usually include axially spaced apart rotor disks 41 which rotate within a generally cylindrical external casing (not shown). Additionally the turbine rotors 45 may contain blades 42 which extend radially outwards from an axis 10 of rotation of the turbine rotors 45 towards the external casing.

Similarly, the compressor rotors 25 in the compressor unit 2 often include axially spaced apart compressor rotor disks 21 which rotate within a generally cylindrical external casing (not shown). Additionally the compressor rotors 25 may contain compressor blades 22 which extend radially outwards from the axis 10 of rotation of the compressor rotors 25 towards the external casing.

The turbine rotors 45 are arranged upon and held together by a tie rod 6 placed along the axis 10. Similarly compressor rotors 25 are arranged upon and held together by the tie rod 6. In the gas turbine 1, often the compressor unit 2 and the turbine unit 4 are also arranged upon and held together by the tie rod 6. Additionally, the compressor unit 2 and the turbine unit 4 are connected through a hollow shaft 5.

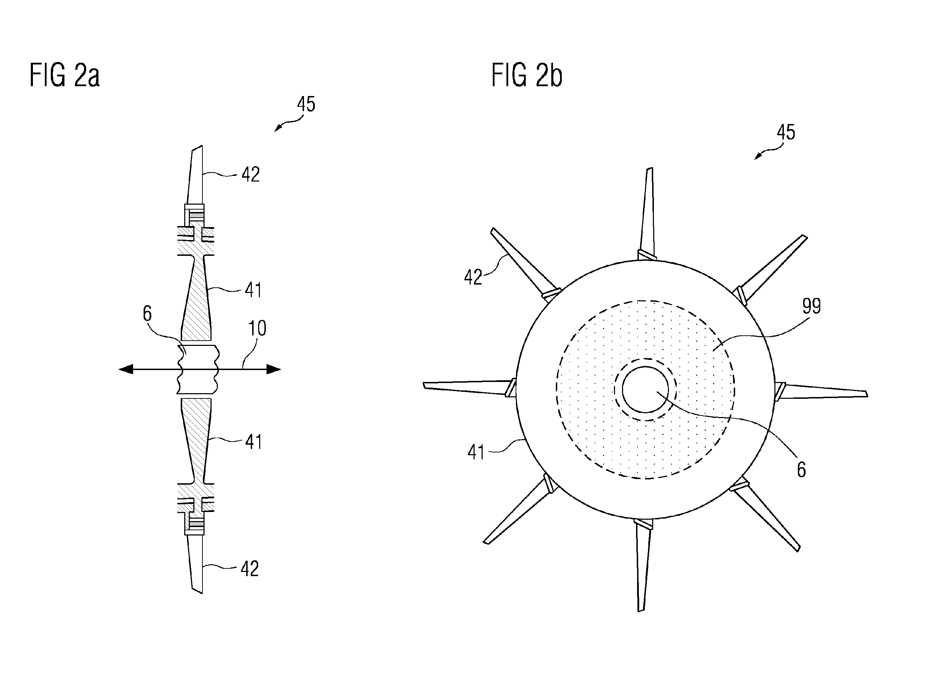

FIG 2a is a schematic representation of a cross-sectional side-view of the turbine rotor 45 containing the rotor disk 41. The cross-section is along a direction perpendicular to the axis 10. As is clear from the FIG 2a, the turbine rotor 45 contains the blades 42, the rotor disk 41 and a section of the tie rod 6.

FIG 2b is a schematic representation of a frontal view of the turbine rotor 45 containing the rotor disk 41 and the blades 42 as arranged on the rotor disk 41. Through a central bore of the rotor disk 41, the tie rod 6 passes. In accordance with the objective of the present invention, a part 99 in the rotor disk 41 is depicted. As explained earlier, the thermal gradient that is to be reduced is established between the blade 42 and the part 99. For reducing the thermal gradient the part 99 needs to be heated according to the aspects of the present invention.

The part 99 may be any one portion in the body of the rotor disk 41 or may be a plurality of portions in the body of the rotor disk 41. It may be noted that part 99 may also be the entire body of the rotor disk 41.

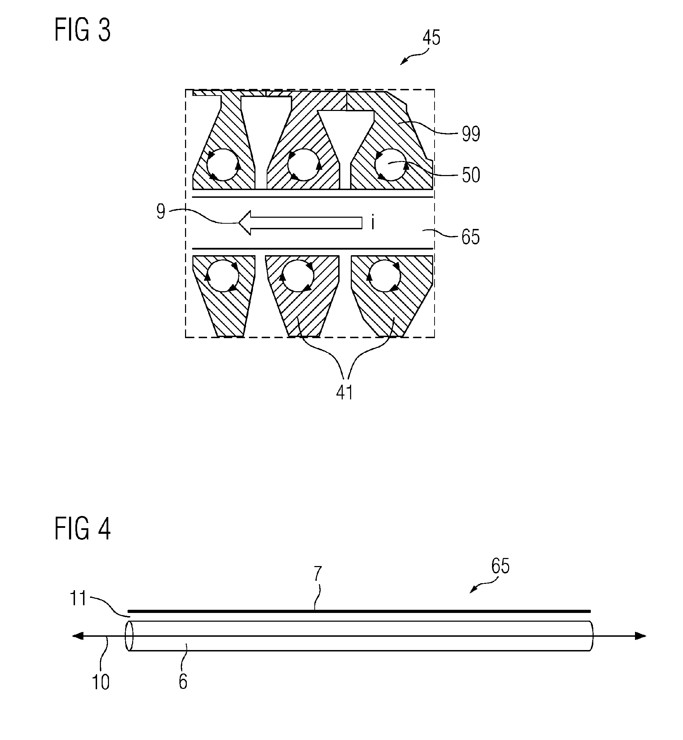

FIG 3 schematically represents the generation of Eddy currents 50 in the part 99 of the rotor disk 41. FIG 3 represents the cross-sectional side-view of a section of the turbine rotors 45 wherein the cross-section is in a direction perpendicular to the axis 10 (as shown in FIG 1). According to the aspects of the present invention, the turbine rotor 45 comprises a conductor 65 for conducting an electric current 9. The conductor 65 is positioned such that in presence of the electric current 9 in the conductor 65, Eddy currents 50 are generated in the parts 99 of the rotor disks 41.

Generally speaking, Eddy currents 50 are generated in an electrically conducting object as a result of passage of alternating current through an electrical conductor present in the vicinity of the object. The electrical conductor may be electrically insulated from the object. This electrical insulation may be achieved by various ways known in the art such as by a layer of dielectric material, or simply a layer of air, present between the object and the electrical conductor.

Referring to FIG 3 again, as the rotor disks 41 are usually electrically conducting objects, being made of metals and metal alloys, the passage of the electrical current 9 through the conductor 65 in the vicinity of the part 99 will result in generation of Eddy currents 50 in the part 99. The part 99 may be electrically insulated from the conductor 65 when the electrical current 9 is passed through the conductor 65. These Eddy currents 50 will result in heating of the part 99 of the rotor disks 41.

It may also be noted that, in arrangements of turbine rotors 45 comprising a plurality of the rotor disks 41 (as shown in FIG 1), the conductor 65 may extend across at least two adjacent rotor disks 41 in the turbine rotor 45, as expressly represented in FIG 3.

In one embodiment of the turbine rotor 45, according to the aspects of the present invention, the conductor 65 may be the tie rod 6 (as shown in FIG 1) of the turbine rotor 45 itself. In this embodiment the tie rod 6 acts as the conductor 65 and is adapted to conduct the electric current 9.

FIG 4 schematically represents a conductor 65 containing a conducting element 7. The conducting element 7, e.g. a cable, is adapted to conduct the electric current 9 and is arranged along the tie rod 6 and/or along the axis 10. The conducting element 7 is electrically insulated from the tie rod 6 by a layer of insulation 11.

The conducting element 7 is made of any material that is electrically conducting. It may be noted that, though FIG 4 depicts only one conducting element 7, in certain embodiments of the turbine rotor 45 the conductor 65 may comprise of a plurality of the conducting elements 7 arranged along the tie rod 6 and/or the axis 10.

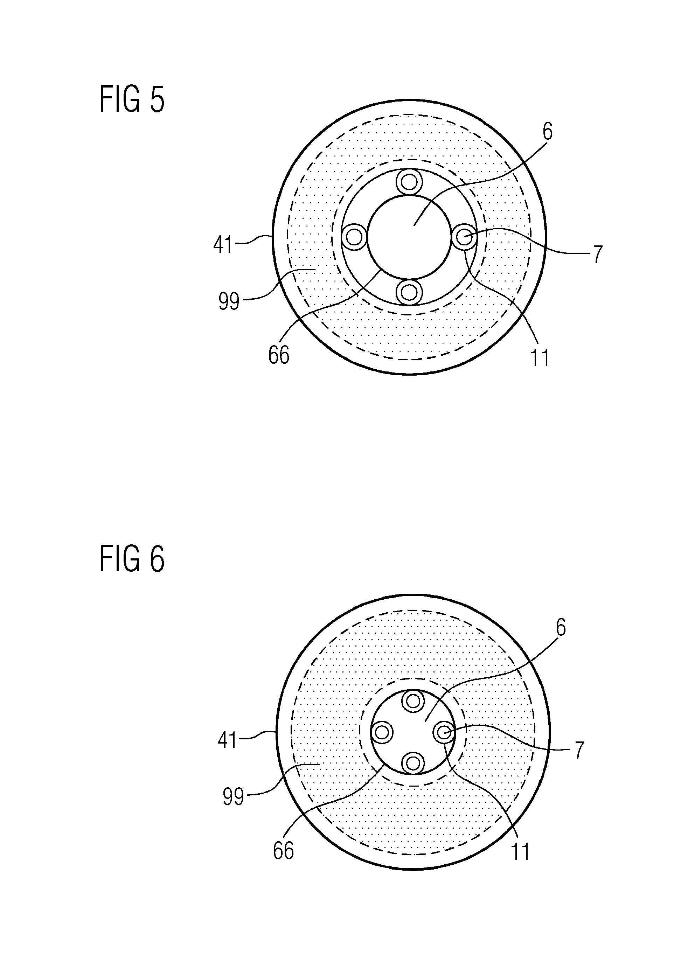

FIG 5 and FIG 6 schematically represent different exemplary arrangements of the plurality of the conducting elements 7 forming the conductor 65. In the exemplary embodiments as shown in FIGS. 5 and 6, the conductor 65 of the turbine rotor 45 comprises the plurality of the conducting elements 7 that are arranged symmetrically along a circumference 66 of a cross-section of the tie rod 6. Each of the conducting elements 7 may be electrically insulated from the tie rod 6 as well as the part 99. The conducting elements 7 may be arranged outside the circumference 66, as shown in FIG 5; or may be arranged inside the circumference 66, as shown in FIG 6. When present inside the circumference 66, the conducting elements 7 may be arranged in longitudinal grooves (not shown) extending across the tie rod 6 parallel to the axis 10.

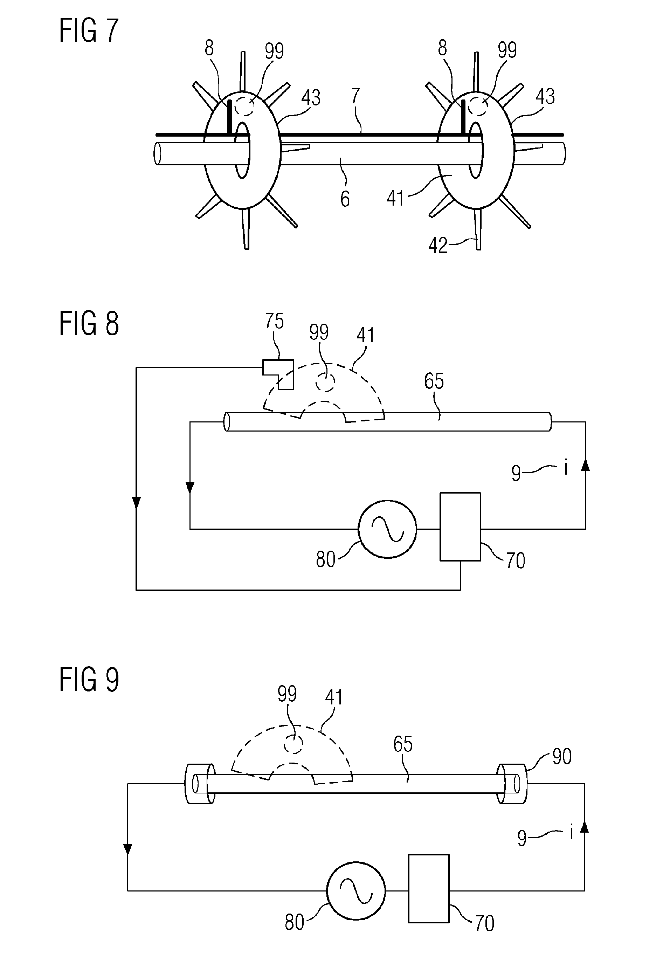

FIG 7 schematically represents a turbine rotor 45 with large central bore such that the internal surface of the rotor disk has a great distance from the conductor which is located in or on the tie rod. The great distance results in less efficient generation of Eddy currents in the part 99 of the rotor disk and, thus, in less effective heating.

To overcome this problem the conductor 65 contains protrusions 8. Each of the protrusions 8 extends outwards from the conductor 65 towards an external periphery 43 of the rotor disks 41. The protrusions 8 are adapted to conduct the electric current 9 and generate Eddy current 50 in the part 99 of the rotor disk 41.

The protrusions 8 may be of any shape and may extend up to the external periphery 43. The primary function of each of the protrusions 8 is to carry electrical current 9 to vicinity of the part 99. The protrusions 8 may be electrically insulated from the part 99. The protrusions 8 may result from modifications of the conductor 65 and thus the protrusions 8 along with the conductor 65 may form a single continuous physical entity formed of the same material; or may be separate elements electrically attached to the conductor 65.

In some embodiments of the present invention, each of the protrusions 8 may be of similar shape and size; and may have similar spatial orientations. In some other embodiments, the protrusions 8 may have dissimilar shape and size; and may have different spatial orientations. There may be still other embodiments wherein some of the protrusions 8 have similar shape and size and similar spatial orientations, while remaining of the protrusions 8 have dissimilar shape and size and different spatial orientations.

FIG 8 is a schematic representation of the conductor 65 along with a temperature sensor 75, a control unit 70 and an electrical connector 80 in the turbine rotor 45. The electrical connector 80 is for providing the electric current 9 to the conductor 65. The electrical connector 80 is electrically coupled to the conductor 65. The electrical connector 80 may be, but not limited to, an electrical inverter, a static source of electric current with constant frequency, and so forth. Functionally, the electrical connector 80 is a means by which an alternating current is provided to the conductor 65.

The control unit 70 is adapted to control an amount of the electric current 9 in the conductor 65, and the temperature sensor 75 is adapted to determine a temperature of the part 99 of the rotor disk 41. The control unit 70 is adapted to control the amount of the electric current 9 in the conductor 65 based on the determined temperature.

In accordance with the objective of invention, minimization of the thermal gradient and subsequently the reduction of thermal stress may be achieved by heating the part 99 to a target temperature. The target temperature may be determined by the use of any of the various stress computation techniques as known in the art, for example fracture mechanical computation technique, and thus, the same has not been described herein for the sake of brevity.

The control unit 70 may further be adapted to compare the temperature as determined by the temperature sensor 75 with the target temperature and based on results of this comparison the control unit 70 may regulate the electric current 9 flowing in the conductor 65. For example, when the determined temperature is more than the target temperature, the control unit 70 may stop the flow of the electric current 9 in the conductor 65. Similarly if during any time before rotation of the turbine rotor 45 is started and/or after rotation of the turbine rotor 45 is started, if the temperature determined by the temperature sensor 75 is lower than the target temperature, the flow of the electric current 9 in the conductor 65 may be provided.

FIG 9 is a schematic representation of the conductor 65 along with slip rings 90 in the turbine rotor 45. The turbine rotor 45 may further comprise at least one slip ring 90. The slip ring 90 is positioned between the conductor 65 and the electrical connector 80. By this positioning, the electric current 9 will flow in series from the electrical connector 80 to the conductor 65 through the slip ring 90.

Generally speaking, a slip ring is a rotary coupling used to transfer electrical current from a stationary unit to a rotating unit. The construction, types and functioning of slip rings is commonly known in the art and thus the same has not been described herein for the sake of brevity.

It may be noted that though the above invention is described for gas turbines, but nevertheless it may be suitably used for reducing the thermal gradient, if any, in any type of turbine.

It may also be noted that the above invention can be easily used for inductive heating of any part of the turbine such as the compressor disks 25 (as shown in FIG 1), if there arises a need for reducing any thermal gradient that may exist.

While this invention has been described in detail with reference to certain embodiments, it should be appreciated that the present invention is not limited to those precise embodiments. Rather, in view of the present disclosure which describes the current best mode for practicing the invention, many modifications and variations would present themselves, to those of skilled in the art without departing from the scope and spirit of this invention. The scope of the invention is, therefore, indicated by the following claims rather than by the foregoing description. All changes, modifications, and variations coming within the meaning and range of equivalency of the claims are to be considered within their scope.

## Claims

1. A turbine rotor (45) with at least one rotor disk (41), the turbine rotor (45) comprising a heating arrangement for heating at least a part (99) of the rotor disk (41), wherein the heating arrangement comprises a conductor (65) for conducting electric current (9) positioned such that in presence of the electric current (9) in the conductor (65), Eddy current (50) is generated in the part (99) of the rotor disk (41).

2. The turbine rotor (45) according to claim 1,
wherein the turbine rotor (45) comprises a plurality of the rotor disks (41) and wherein the conductor (65) extends across at least two adjacent rotor disks (41) in the turbine rotor (45).

3. The turbine rotor (45) according to claims 1 or 2,
wherein the conductor (65) comprises a tie rod (6) of the turbine rotor (45) and wherein the tie rod (6) is adapted to conduct the electric current (9).

4. The turbine rotor (45) according to claim 1 or 2,
wherein the conductor (65) comprises a conducting element (7) adapted to conduct the electric current (9) and wherein the conducting element (7) is arranged along a tie rod (6).

5. The turbine rotor (45) according to claim 4,
wherein the conductor (65) comprises a plurality of the conducting elements (7) arranged symmetrically along a circumference (66) of a cross-section of the tie rod (6).

6. The turbine rotor (45) according to claims 1 to 5,
wherein the conductor (65) comprises at least one protrusion (8) wherein the protrusion (8) extends outwards from the conductor (65) towards an external periphery (43) of the rotor disks (41) and wherein the protrusion (8) is adapted to conduct the electric current (9) and generate Eddy current (50) in the part (99) of the rotor disk (41).

7. The turbine rotor (45) according to any of claims 1 to 6,
further comprising an electrical connector (80) for providing the electric current (9) to the conductor (65), wherein the electrical connector (80) is electrically coupled to the conductor (65).

8. The turbine rotor (45) according to claim 7,
wherein the electrical connector (80) is an electrical inverter.

9. The turbine rotor (45) according to claims 7 or 8, further comprising at least one slip ring (90) positioned between the conductor (65) and the electrical connector (80) such that the electric current (9) flows in series from the electrical connector (80) to the conductor (65) through the slip ring (90).

10. The turbine rotor (45) according to any of claims 1 to 9,
further comprising a control unit (70) adapted to control an amount of the electric current (9) in the conductor (65).

11. The turbine rotor (45) according to claim 10,
wherein the control unit (70) further comprises a temperature sensor (75) adapted to determine a temperature of the part (99) of the rotor disk (41) and wherein the control unit (70) is adapted to control the amount of the electric current (9) in the conductor (65) based on the determined temperature.

12. A method of inductive heating of at least a part (99) of at least one rotor disk (41) of a turbine rotor (45), the turbine rotor (45) comprising a heating arrangement for heating the part (99) of the rotor disk (41),
wherein the heating arrangement comprises a conductor (65) for conducting the electric current (9) positioned such that in presence of the electric current (9) in the conductor (65), Eddy current (50) is generated in the part (99) of the rotor disk (41) and wherein the turbine rotor (45) further comprises an electrical connector (80) for providing the electric current (9) to the conductor (65) and wherein the electrical connector (80) is electrically coupled to the conductor (65), the method comprising:
- passing the electric current (9) in the conductor (65).

13. The method according to claim 12,
wherein the passing of the electric current (9) in the conductor (65) is initiated before rotation of the turbine rotor (45) is started.

14. The method according to claim 12,
wherein the turbine rotor (45) further comprises at least one slip ring (90) positioned between the conductor (65) and the electrical connector (80) such that the electric current (9) flows in series from the electrical connector (80) to the conductor (65) through the slip ring (90) and wherein the passing of the electric current (9) in the conductor (65) is initiated after rotation of the turbine rotor (45) is started.

15. The method according to any of claims 12 to 14, wherein the turbine rotor (45) further comprises a control unit (70) adapted to control an amount of the electric current (9) in the conductor (65) and a temperature sensor (75) adapted to determine a temperature of the part (99) of the rotor disk (41), the method comprising:
- controlling the electric current (9) in the conductor (65) based on the determined temperature.
